(19) Europäisches Patentamt
European Patent Office
Office européen des brevets

(11) **EP 4 199 200 A1**

(12) **EUROPÄISCHE PATENTANMELDUNG**

(43) Veröffentlichungstag:
**21.06.2023 Patentblatt 2023/25**

(21) Anmeldenummer: **21215667.3**

(22) Anmeldetag: **17.12.2021**

(51) Internationale Patentklassifikation (IPC):
$H01M\ 50/116^{(2021.01)}$    $C22C\ 21/00^{(2006.01)}$
$C22C\ 21/08^{(2006.01)}$    $C22F\ 1/05^{(2006.01)}$

(52) Gemeinsame Patentklassifikation (CPC):
**H01M 50/116; C22C 21/00; C22C 21/02; C22C 21/06; C22C 21/08; C22F 1/043; C22F 1/047; C22F 1/05**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Speira GmbH**
**41515 Grevenbroich (DE)**

(72) Erfinder:
• **LENTZ, Dr.-Ing. Martin Christoph**
**53123 Bonn (DE)**
• **RUPPERT, Mathis**
**53113 Bonn (DE)**

(74) Vertreter: **Cohausz & Florack**
**Patent- & Rechtsanwälte**
**Partnerschaftsgesellschaft mbB**
**Bleichstraße 14**
**40211 Düsseldorf (DE)**

(54) **HOCHFESTES BATTERIEZELLGEHÄUSE FÜR GROSSFORMATIGE BATTERIERUNDZELLEN AUS EINER ALUMINIUMLEGIERUNG**

(57) Die Erfindung betrifft ein Batteriezellgehäuse einer Batterierundzelle aufweisend einen zylindrischen Gehäusemantel mit einem Außendurchmesser von mehr als 15 mm, bevorzugt mehr als 20 mm, besonders bevorzugt mehr als 22 mm sowie die Verwendung einer Aluminiumlegierung zur Herstellung eines erfindungsgemäßen Batteriezellgehäuses. Die Aufgabe, ein hoch festes Batteriezellgehäuse einer Batterierundzelle mit einem zylindrischen Gehäusemantel mit einem Durchmesser von mehr als 15 mm, bevorzugt mehr als 20 mm, insbesondere mehr als 22 mm vorzuschlagen, welches verbesserte Eigenschaften im Hinblick auf Wärmemanagement und Gewicht der Batterierundzelle ermöglicht ohne dabei die Kapazität der Batterierundzelle zu sehr zu beschränken, wird dadurch gelöst, dass der Gehäusemantel zumindest teilweise aus einer Aluminiumlegierung besteht, und die Streckgrenze $R_{p0,2}$ des Gehäusemantels mindestens 183 MPa, vorzugsweise mindestens 220 MPa, besonders bevorzugt mindestens 250 MPa beträgt.

Fig.1

**Beschreibung**

Die Erfindung betrifft ein Batteriezellgehäuse einer Batterierundzelle aufweisend einen zylindrischen Gehäusemantel mit einem Außendurchmesser von mehr als 15 mm, bevorzugt mehr als 20 mm, besonders bevorzugt mehr als 22 mm sowie die Verwendung einer Aluminiumlegierung zur Herstellung eines erfindungsgemäßen Batteriezellgehäuses.

Batteriezellen werden in einer Vielzahl von technischen Anwendungen eingesetzt, um einen elektrischen Verbraucher mit elektrischer Energie zu versorgen. Anwendungsfelder für Batteriezellen sind beispielsweise in der Elektromobilität, insbesondere bei Elektroautos, Elektrofahrrädern und Elektrorollern, in der Verbraucherelektronik, insbesondere bei Laptop-Computern, Tablet-Computern, Mobiltelefonen, Digitalkameras und Videokameras, oder in der Energietechnik, insbesondere bei Batteriespeichern, um nur einige wenige zu nennen. Oft werden mehrere Batteriezellen seriell oder parallel zu einem Batteriemodul beziehungsweise zu einem Batteriesystem zusammengeschaltet. Es existieren jedoch auch Anwendungen, bei denen einzelne Batteriezellen als Energiequelle dienen.

Batteriezellen lassen sich grundsätzlich unterscheiden in Primärzellen, welche nur einmal entladen und nicht wieder aufgeladen werden können, sowie Sekundärzellen, welche wiederaufladbar sind. Sowohl bei Primärzellen als auch bei Sekundärzellen können die notwendigen elektrochemischen Prozesse, welche die Funktionsweise der Batteriezelle bereitstellen, mit einer Vielzahl von unterschiedlichen Materialien realisiert werden. Beispiele für Primärzellen sind in diesem Zusammenhang Alkali-Mangan-Zellen, Zink-Kohle-Zellen, Nickel-Oxyhydroxid-Zellen oder Lithium-Eisensulfid-Zellen, um nur einige wenige zu nennen. Beispiele für Sekundärzellen sind Lithium-Ionen-Zellen, Natrium-Ionen-Zellen, Nickel-Cadmium-Zellen, Nickel-Metallhydrid-Zellen oder Nickel-Zink-Zellen, um nur einige wenige zu nennen.

Insbesondere in den Bereichen Elektromobilität und Verbraucherelektronik kommen Lithium-Ionen-Sekundärzellen unter anderem aufgrund ihrer vergleichsweise hohen gravimetrischen und volumetrischen Energiedichte seit einigen Jahren in zunehmendem Maße zum Einsatz. Wie auch andere Typen von Batteriezellen weisen Lithium-Ionen-Sekundärzellen ein Batteriezellgehäuse auf. Dieses bildet die äußere Form der Batteriezelle und umschließt einen Hohlraum, in dem sich unter anderem das Anodenmaterial, das Kathodenmaterial, die Separatoren und ein Elektrolyt befinden. Dabei lassen sich verschiedene Bauformen eines Batteriezellgehäuses unterscheiden: Batteriezellgehäuse zylindrischer Bauform weisen im Wesentlichen die Form eines Zylinders auf. Ist die Höhe des Zylinders größer als der Durchmesser, spricht man von Batterierundzellen, andernfalls von Knopfzellen. Batteriezellgehäuse prismatischer Bauform weisen im Wesentlichen die Form eines Prismas, insbesondere eines Quaders, auf. Als weitere Variante ist die Pouch-Bauform zu nennen, bei der das Batteriezellgehäuse im Wesentlichen die Form einer Tasche beziehungsweise eines Beutels aufweist.

Aufgrund hoher Anforderungen an die Festigkeit beziehungsweise mechanische Stabilität sowie gleichzeitig hoher Anforderungen an die elektrochemische Beständigkeit gegenüber dem korrosiv auf das Batteriezellgehäuse wirkenden Elektrolyten wurden insbesondere zylindrische Batteriezellgehäuse bisher in der Regel aus nickelplattiertem Stahl hergestellt. Das dominierende Batterierundzellenformat sind Batterierundzellen des Typs 18650 mit 18 mm Durchmesser. Diese werden in verschiedenen Anwendungen durch Batterierundzellen des Typs 21700 mit 21 mm ersetzt. Zu erwarten ist aber auch bereits eine Substitution von Batterierundzellen des Typs 21700 durch Batterierundzellen des Typs 46800 mit 46 mm Durchmesser beispielsweise im Bereich der Elektromobilität. Die wachsenden Zellformate stellen höhere Anforderungen an den Abtransport von im Inneren der Batterierundzelle entstehender Wärme und damit an die elektrische und thermische Leitfähigkeit des Batteriezellgehäuses.

Batteriepakete mit einer Vielzahl an Batterierundzellen fordern zusätzlich Beiträge der Batterierundzellen zum mechanischen Design der Batteriepakete, um Gewichtsersparnisse zu erzielen.

Ansätze zur Verwendung von Aluminiumlegierungen für zylindrische Batteriezellgehäuse sind bereits bekannt, beschränken sich allerdings auf die Aluminiumlegierung AA3003. Beispielsweise ist aus der US-amerikanischen Patentschrift US 6,258,480 B1 ein Batteriezellgehäuse mit 13,8 mm Außendurchmesser und einer Höhe von 49,0 mm bekannt. Das Batteriezellgehäuse wurde durch ein Tief- und Streckziehen aus einem runden Zuschnitt eines Aluminiumlegierungsbleches aus einer Aluminiumlegierung vom Typ AA3003 hergestellt.

Während bei Batteriezellgehäuse mit geringeren Querschnitten die mechanische Stabilität des Batteriezellgehäuses im Wesentlichen aus der Steifigkeit der geometrischen Form als Zylinder resultiert, spielt bei größeren Querschnitten der Batterierundzellen ab 15 mm Außendurchmesser zunehmend die Streckgrenze $R_{p0,2}$ des Werkstoffs des Batteriezellgehäuses eine Rolle. In Bezug auf die mechanische Festigkeit ist hier als Referenz vernickelter Stahl anzusehen, welcher als Werkstoff für Batteriezellgehäuse an sich bekannt ist. Angesetzt wird für nickelplattierte Stahlbänder des Typs AISI1020 eine typische Streckgrenze $R_{p0,2}$ von 350 MPa.

Der Referenzwerkstoff Stahl bietet bei den wachsenden Zellformaten immer noch die geringsten Wandstärken und damit größtmögliche Volumina für die Aufnahme des Elektrodenwickels bzw. der sogenannten "Jelly Roll" an. Diese "Jelly Roll" besteht aus einer mehrschichtigen Anordnung von Anodenmaterial, Separatorschicht und Kathodenmaterial, welche auf einem Wickelkern aufgewickelt und im Batteriezellgehäuse angeordnet ist. Sie bestimmt die Energiekapazität der Batterierundzelle.

Batteriezellformate mit Durchmessern von mehr als 15 mm stellen zunehmend höhere Anforderungen an den Abtransport von im Inneren der Batteriezellgehäuse entstehenden Wärmemengen. Hier bietet Stahl keine optimale Lösung. Zudem ergeben sich beim Einsatz in der Elektromobilität auch Nachteile durch das Gewicht der Batterierundzellen aus Stahl. Gewicht ist in der Elektromobilität aber ein wichtiger Faktor zur Durchsetzung des batteriebetriebenen elektrischen Antriebs.

Hiervon ausgehend ist es Aufgabe der vorliegenden Erfindung ein hochfestes Batteriezellgehäuse einer Batterierundzelle mit einem zylindrischen Gehäusemantel mit einem Durchmesser von mehr als 15 mm, bevorzugt mehr als 20 mm, insbesondere mehr als 22 mm vorzuschlagen, welches verbesserte Eigenschaften im Hinblick auf Wärmemanagement und Gewicht der Batterierundzelle ermöglicht, ohne dabei die Kapazität der Batterierundzelle zu sehr zu beschränken. Ferner soll eine Verwendung einer Aluminiumlegierung zur Herstellung eines Batteriezellgehäuses vorgeschlagen werden.

Die oben genannte Aufgabe wird für ein Batteriezellgehäuse dadurch gelöst, dass der Gehäusemantel zumindest teilweise aus einer Aluminiumlegierung besteht und die Streckgrenze $Rp_{0,2}$ des Gehäusemantels mindestens 183 MPa, vorzugsweise mindestens 220 MPa, besonders bevorzugt mindestens 250 MPa beträgt.

Unter einem zumindest teilweise aus einer Aluminiumlegierung bestehenden Gehäusemantel wird erfindungsgemäß ein Gehäusemantel bestehend aus einer Aluminiumlegierung verstanden, der beispielsweise weitere Merkmale, beispielsweise eine äußere oder innere Beschichtung aufweisen kann, welche aber für die mechanische Festigkeit des Gehäusemantels nicht maßgeblich sind.

Untersuchungen haben gezeigt, dass ein Gehäusemantel einer Batterierundzelle, welcher zumindest teilweise aus einer Aluminiumlegierung besteht und eine Streckgrenze $Rp_{0,2}$ von mindestens 183 MPa aufweist, bei großformatigen Batterierundzellen, beispielsweise vom Format 4680 mit einem Durchmesser von 46 mm, mit einer Wandstärke ausgestattet werden kann, die bei Vorgabe einer zu erfüllenden, typischen Innendruckstabilität von 9 MPa im Vergleich zum Gehäusemantel aus Stahl des Typs AISI1020 eine um lediglich weniger als 5 % geringere Wickellänge der "Jelly-Roll" der Batterierundzelle ermöglicht. Bei den Untersuchungen wurde ein Durchmesser des Wickelkerns von 4 mm angenommen.

Gleichzeitig sorgt die deutlich höhere elektrische und thermische Leitfähigkeit der Aluminiumlegierung des Gehäusemantels gegenüber Stahl insgesamt für eine deutlich verbesserte Wärmeabfuhr aus dem Inneren der Batterierundzelle. Bei größeren Streckgrenzen des Gehäusemantels, beispielsweise 258 MPa verringern sich die Verluste an Wickellänge der oben genannten "Jelly Roll" sogar auf unter 2 %. Ferner ergeben sich aufgrund der deutlich höheren Dichte von Stahl deutliche Gewichtsvorteile für das Batterierundzellgehäuse aus einer Aluminiumlegierung. Diese sind sogar erheblich und können bis zu einem Faktor von annähernd 2 bei einem Gehäusemantel mit beispielsweise einer Streckgrenze $Rp_{0,2}$ von 258 MPa betragen.

Gemäß einer ersten Ausgestaltung des Batteriezellgehäuses weist der Gehäusemantel des Batteriezellgehäuses eine Wandstärke auf, welche die folgende Relation erfüllt: Außendurchmesser der Batterierundzelle/Wandstärke > 41,5, bevorzugt > 47,5, insbesondere bevorzugt > 55,0. Je größer das Verhältnis aus Außendurchmesser des Gehäusemantels und Wandstärke, desto geringer ist der Verlust an Volumen im Inneren des Gehäusemantels für die Wickellänge der "Jelly-Roll", die proportional zur Kapazität der Batteriezelle ist, und desto geringer ist auch das Gewicht des Batteriezellgehäuses. Folglich kann die gravimetrische Energiedichte durch eine Reduktion der Wandstärke in Verbindung mit der geringen Dichte von Aluminium signifikant verbessert werden.

Die elektrische Leitfähigkeit von Aluminiumlegierungen ist deutlich höher als die von Stahl und liegt bereits für AA3003 Aluminiumlegierungen bei 23 MS/m. Gemäß einer weiteren Ausgestaltung weist der Gehäusemantel bevorzugt eine elektrische Leitfähigkeit von mehr als 25 MS/m, bevorzugt mehr als 28 MS/m, besonders bevorzugt mehr als 30 MS/m auf. Die elektrischen Leitfähigkeiten sind selbstverständlich abhängig von der Legierungszusammensetzung der Aluminiumlegierung, aber auch vom Gefügezustand. Eine Kombination von besonders hohen elektrischen Leitfähigkeiten und sehr hohen Festigkeiten weisen niedrig legierte AlMgSi-Legierungen auf, die aushärtbar sind und mittels Lösungsglühung und anschließender Warmauslagerung in einen der Zustände T6, T6x, T7 oder T7x überführt werden können. Stahl des Typs AISI 1020 hat dagegen eine elektrische Leitfähigkeit von ca. 6,3 MS/m und liegt damit um mehr als Faktor 4 unter den höchsten elektrischen Leitfähigkeiten der Aluminiumlegierungen. Es wird erwartet, dass die Performance von Sekundärbatterien mit einem erfindungsgemäßen Batteriezellgehäuse beim Laden und Entladen der Batterie verbessert werden kann, da der ohmsche Widerstand der Zelle reduziert und die Wärmeleitung im Zellgehäuse verbessert werden.

Die Aluminiumlegierung des Gehäusemantels des Batteriezellgehäuses weist gemäß einer nächsten Ausgestaltung die folgende Zusammensetzung in Gew.-% auf:

0,2 % ≤ Si ≤ 2,0 %, bevorzugt 0,2 % ≤ Si ≤ 1,5 % oder 0,2 % ≤ Si ≤ 1,3 %,
Fe ≤ 0,5 %,
Cu ≤ 0,8 %, bevorzugt ≤ 0,6 %, weiter bevorzugt ≤ 0,45 %

Mn ≤ 1,4 %, bevorzugt 1,0 % ≤ Mn ≤ 1,4 %, weiter bevorzugt Mn ≤ 0,6 %,

Mg ≤ 2,0 %, bevorzugt ≤ 1,5 %, weiter bevorzugt 0,2 % ≤ Mg ≤ 1,5 %

Cr ≤ 0,25 %, bevorzugt ≤ 0,15 %,

Zn ≤ 0,4 %, bevorzugt ≤ 0,25 %,

Ti ≤ 0,2 %, bevorzugt 0,01% ≤ Ti ≤ 0,20 %,

V ≤ 0,05 %, bevorzugt ≤ 0,03 %, weiter bevorzugt ≤ 0,0015 %,

Zr ≤ 0,25 %, bevorzugt ≤ 0,20, weiter bevorzugt ≤ 0,05 % oder ≤ 0,0015 %,

Ni ≤ 0,2 %, bevorzugt ≤ 0,05 %, weiter bevorzugt ≤ 0,03 % oder ≤ 0,0015 %,

Rest Al mit unvermeidbaren Verunreinigung einzeln maximal 0,05 %, in Summe maximal 0,15 %.

Der Silizium-Gehalt von 0,2 Gew.-% ≤ Si ≤ 2,0 Gew.-% führt in Kombination mit Eisen- und Mangan-Gehalten in den angegebenen Mengen insbesondere zu relativ gleichförmig verteilten, kompakten Partikeln der quaternären α-Al(Fe,Mn)Si-Phase. Diese ausgeschiedenen Partikel steigern sowohl die Festigkeit der Aluminiumlegierung als auch deren elektrische und thermische Leitfähigkeit, da sie dem Mischkristall Eisen und Mangan entziehen, ohne jedoch andere Eigenschaften wie das Korrosionsverhalten, d.h. die Elektrolytbeständigkeit, oder die Umformbarkeit negativ zu beeinflussen. Silizium-Gehalte von weniger als 0,2 Gew.-% führen zu einer reduzierten Ausscheidung von α-Al(Fe,Mn)Si-Phasen, was zur Beeinträchtigung der elektrischen und thermischen Leitfähigkeit durch gelöstes Mangan führen kann. Darüber hinaus wirkt sich das Fehlen von α-Al(Fe,Mn)Si-Phasen negativ auf den Werkzeugverschleiß aus. Silizium-Gehalte können in Verbindung mit Magnesium zur Bildung von $Mg_2Si$-Phasen bzw. metastabilen Phasen der β-Ausscheidungssequenz führen. Dabei können Silizium-Gehalte von mehr als 0,3 Gew.-% in Verbindung mit Magnesium einen hinreichend großen Phasenanteil generieren so dass eine signifikante Erhöhung der Festigkeit durch Ausscheidungshärtung erfolgen kann. Bei zu hohen Silizium-Gehalten wird die Löslichkeitsgrenze von $Mg_2Si$ überschritten, so dass kein zusätzlicher Beitrag der Ausscheidungshärtung zur Festigkeit erbracht wird. Darüber hinaus steigt die Wahrscheinlichkeit der Ausbildung grober $Mg_2Si$ Phasen, die während einer Lösungsglühung in technisch relevanten Zeiträumen nicht wieder aufgelöst werden können und die weitere Ausscheidungshärtung sowie die Umformbarkeit beeinträchtigen können. Daher wird der Silizium-Gehalt auf 0,2 Gew.-% ≤ Si ≤ 2 Gew.-% beschränkt. In bevorzugten Varianten der Aluminiumlegierung wird der Silizium-Gehalt auf 0,2 Gew.-% ≤ Si ≤ 1,5 Gew.-%, besonders bevorzugt auf 0,3 Gew.-% ≤ Si ≤ 1,3 Gew.-% beschränkt, um eine ideale Festigkeit und eine schnelle Ausscheidungshärtung zu ermöglichen.

Der Eisen-Gehalt der Aluminiumlegierung liegt bei maximal 0,5 Gew.-%. Eisen führt in Kombination mit dem erfindungsgemäßen Mangan-Gehalt in der angegebenen Menge zur Ausbildung von $Al_6(Mn,Fe)$-Phasen sowie, wie bereits oben ausgeführt, in Kombination mit den erfindungsgemäßen Silizium- und Mangan-Gehalten in den angegebenen Mengen zur Ausscheidung der Partikel der quaternären α-Al(Fe,Mn)Si-Phase. Dabei trägt Eisen zur Absenkung der Löslichkeit von Mangan in Aluminium bei, wodurch mehr Mangan in intermetallischen Phasen gebunden wird, was sich positiv auf die elektrische und thermische Leitfähigkeit auswirkt. Daneben beeinflussen die intermetallischen Phasen Erholungs- und Rekristallisationsvorgänge und verbessern die thermische Stabilität der mechanischen Eigenschaften. Durch die Wechselwirkung mit Silizium in α-Al(Fe,Mn)Si- bzw. AlFeSi-Phasen wird dem Mischkristall Silizium entzogen, was die Ausscheidungshärtung beeinträchtigen kann. Oberhalb von 0,5 Gew.-% kann Eisen die Bildung grober intermetallischer Phasen unterstützen. Weiterhin ist der Einsatz von rezyklierten Aluminiumprodukten erstrebenswert, was im Allgemeinen Beimengungen von Eisen mit sich bringt. Vorzugweise ist die Aluminiumlegierung daher nicht eisenfrei, d.h. der Eisengehalt ist größer 0 Gew.-%.

Der Kupfer-Gehalt der Aluminiumlegierung liegt im Bereich Cu ≤ 0,8 Gew.-%. In einer Ausführungsform der Aluminiumlegierung liegt der Kupfer-Gehalt der Aluminiumlegierung im Bereich Cu ≤ 0,45 Gew.-%, vorzugsweise 0,1 Gew.-% ≤ Cu ≤ 0,2 Gew.-%. Dadurch, dass ein Kupfer-Gehalt von bis zu 0,8 Gew.-% zugelassen wird, wird eine erhöhte Toleranz der Aluminiumlegierung für kupferhaltige Aluminiumlegierungsschrotte erreicht, was die Realisierung hoher Recyclingmaterialanteile bei der Herstellung des Batteriegehäuses begünstigt. Kupfer trägt insgesamt zur Erhöhung der Festigkeiten bei. Nachdem zu hohe Kupfer-Gehalte sich jedoch negativ auf die Korrosionseigenschaften auswirken können, wird der Kupfer-Gehalt zur Erzielung einer verbesserten Elektrolytbeständigkeit auf höchstens 0,6 Gew.-%, bevorzugt auf höchstens 0,45 Gew.-% begrenzt.

Der Mangan-Gehalt der Aluminiumlegierung liegt bei maximal 1,4 Gew.-%. Hohe Mangan-Gehalte mit 1,0 Gew.-% bis 1,4 Gew.-% bieten dabei neben einer hohen Korrosionsbeständigkeit auch hohe Festigkeiten in stark kaltverfestigtem Zustand, z.B. H18 oder H19, in Kombination mit den Silizium- und Eisen-Gehalten in den angegebenen Mengen zur Ausscheidung der Partikel der quaternären a-Al(Fe,Mn)Si-Phase sowie der $Al_6(Mn,Fe)$-Phase. Die intermetallischen Phasen behindern Erholungs- und Rekristallisationsvorgänge und verbessern somit die thermische Stabilität der mechanischen Eigenschaften. Mangan-Gehalte von mehr als 1,4 Gew.-%, begünstigen die Bildung von groben intermetallischen Phasen, die sich ungünstig auf die Umformeigenschaften im Tiefziehprozess auswirken. Darüber hinaus reduzieren Mangan-Gehalte von mehr als 1,4 Gew.-% die elektrische und thermische Leitfähigkeit des Batteriezellgehäuses so stark, dass das Thermomanagement ineffizient wird. Mangan-Gehalte von maximal 0,6 Gew.-% reduzieren die Festigkeitssteigerung durch Dispersoid- und Mischkristallhärtung. Da aufgrund des geringeren Gehalts an Mangan mehr Silizium zur Ausscheidungshärtung bereitsteht, kann in Verbindung mit Magnesium-Gehalten von 0,2 Gew.-% bis 1,5 Gew.-% eine Festigkeitssteigerung durch Ausscheidungshärtung erreicht werden. Diese Werkstoffkombination hat in den vorliegenden Untersuchungen die höchsten Streckgrenzwerte erreicht.

Der Magnesium-Gehalt der Aluminiumlegierung liegt bei maximal 2,0 Gew.-%. In einer Ausführungsform des Batteriezellgehäuses liegt der Magnesium-Gehalt bei maximal 1,5 Gew.-%, bevorzugt bei 0,2 Gew.-% ≤ Mg ≤ 1,5 Gew.-%. Dadurch, dass ein Magnesium-Gehalt von bis zu 2,0 Gew.-% zugelassen wird, wird eine erhöhte Toleranz der Aluminiumlegierung für magnesiumhaltige Aluminiumlegierungsschrotte wie beispielsweise UBC-Schrotte erreicht, was die Realisierung hoher Recyclinganteile bei der Herstellung der Batteriezellgehäuse weiter begünstigt. Daneben führt das Vorhandensein von Magnesium ab einem Gehalt von mindestens 0,5 Gew.-% zu einer effizienten Mischkristallverfestigung, die zu einer verstärkten Kaltverfestigung beiträgt und somit die Festigkeit erhöht. In Verbindung mit Silizium bildet Magnesium bei geeigneter Lösungsglühung und Warmauslagerungen metastabile Ausscheidungen der β-Ausscheidungssequenz, die die Festigkeit signifikant durch Ausscheidungshärtung erhöhen. Nachdem zu hohe Magnesium-Gehalte sich jedoch, insbesondere in gelöster Form, negativ auf die elektrische und thermische Leitfähigkeit auswirken, wird der Magnesium-Gehalt erfindungsgemäß auf höchstens 2,0 Gew.-%, bevorzugt 1,5 Gew.-% begrenzt. Zur Erzielung verbesserter mechanischer Eigenschaften wird der Magnesium-Gehalt in einer Ausführungsform auf einen Bereich von 0,2 Gew.-% ≤ Mg ≤ 1,5 Gew.-% eingestellt. Dies stellt einen Kompromiss zwischen hoher Festigkeit, gutem Umformverhalten sowie hoher elektrischer und thermischer Leitfähigkeit bei gleichzeitig guter Recycling-Toleranz dar.

Der Chrom-Gehalt der Aluminiumlegierung liegt im Bereich Cr ≤ 0,25 Gew.-%. In einer Ausführungsform des erfindungsgemäßen Batteriezellgehäuses liegt der Chrom-Gehalt der Aluminiumlegierung im Bereich Cr ≤ 0,15 Gew.-%, vorzugsweise Cr ≤ 0,03 Gew.-%. Dadurch, dass ein Chrom-Gehalt von bis zu 0,25 Gew.-% zugelassen wird, wird eine erhöhte Toleranz der Aluminiumlegierung für chromhaltige Aluminiumlegierungsschrotte erreicht, was die Realisierung hoher Recyclinganteile bei der Herstellung der Batteriezellgehäuse begünstigt. Daneben wirkt Chrom auch festigkeitssteigernd und bildet Dispersoide, die die thermische Stabilität erhöhen und rekristallisations- bzw. erholungsbedingte Entfestigung behindern. Nachdem zu hohe Chrom-Gehalte sich jedoch negativ auf die elektrische Leitfähigkeit der Aluminiumlegierung auswirken können, wird der Chrom-Gehalt bei immer noch ausreichender Recycling-Toleranz und Festigkeit auf 0,15 Gew.-%, vorzugsweise 0,03 Gew.-%, begrenzt.

Der Zink-Gehalt der Aluminiumlegierung liegt im Bereich Zn ≤ 0,4 Gew.-%. In einer Ausführungsform des Batteriezellgehäuses liegt der Zink-Gehalt der Aluminiumlegierung bei maximal 0,25 Gew.-%, vorzugsweise maximal 0,1 Gew.-%.

Dadurch, dass ein Zink-Gehalt von bis zu 0,4 Gew.-% zugelassen wird, wird eine erhöhte Toleranz der Aluminiumlegierung für zinkhaltige Aluminiumlegierungsschrotte erreicht, was die Realisierung hoher Recycling-Raten begünstigt. Daneben wirkt Zink auch festigkeitssteigernd. Nachdem zu hohe Zink-Gehalte jedoch die Schweißbarkeit, die elektrische und thermische Leitfähigkeit sowie die Korrosionsbeständigkeit der Aluminiumlegierung verschlechtern, wird der Zink-Gehalt auf höchstens 0,4 Gew.-% begrenzt. Eine verbesserte Schweißbarkeit und gute Elektrolytbeständigkeit bei einem gleichzeitigen Beitrag von Zink zur Festigkeitssteigerung wird durch einen Zink-Gehalt von maximal 0,25 Gew.-%, bevorzugt maximal 0,1 Gew.-% erreicht.

Der Titan-Gehalt der Aluminiumlegierung beträgt maximal 0,2 Gew.-%. In einer Ausführungsform des Batteriezellgehäuses liegt der Titan-Gehalt der Aluminiumlegierung im Bereich 0,01 Gew.-% ≤ Ti ≤ 0,20 Gew.-%, vorzugsweise 0,005 Gew.-% ≤ Ti ≤ 0,05 Gew.-%. Dadurch, dass ein Titan-Gehalt von bis zu 0,20 Gew.-% zugelassen wird, wird eine erhöhte Toleranz der Aluminiumlegierung für titanhaltige Aluminiumlegierungsschrotte erreicht, was die Realisierung hoher Recyclinganteile bei der Herstellung von Batteriezellgehäusen begünstigt. Titan wird in geringen Mengen zur Kornfeinung beim Gießen der Aluminiumlegierung eingesetzt. Zu hohe Titan-Gehalte können jedoch die Umformeigenschaften der Aluminiumlegierung negativ beeinflussen und reduzieren die elektrische und thermische Leitfähigkeit signifikant, sodass der Titan-Gehalt erfindungsgemäß auf höchstens 0,2 Gew.-% begrenzt wird. Vorzugsweise beträgt der Titan-Gehalt 0,01 Gew.-% ≤ Ti ≤ 0,20 Gew.-%.

Vanadium wird in Aluminiumlegierungen zur Kontrolle der Rekristallisation und der Kornfeinung eingesetzt. Da Vanadium die elektrische und thermische Leitfähigkeit von Aluminium sowohl als intermetallische Phase als auch gelöst stark beeinträchtigt, wird der Vanadium-Gehalt der Aluminiumlegierung auf maximal 0,05 Gew-% bevorzugt maximal 0,03 Gew-%, besonders bevorzugt maximal 0,0015 Gew-% begrenzt. Höhere Vanadium-Gehalte beeinträchtigen die Leitfähigkeit in einem Maße, das der angestrebten Effizienzsteigerung des Thermomanagements widerspricht. Zirkon wird in Aluminiumlegierungen ebenfalls zur Kontrolle der Rekristallisation und der Kornfeinung eingesetzt. Allerdings ist die Löslichkeit von Zirkon in Aluminium begrenzt, so dass zu hohe Zirkon-Gehalte die Bildung grober intermetallischer Phasen hervorrufen, die die Umformbarkeit beeinträchtigen können. Da Zirkon darüber hinaus die elektrische und thermische Leitfähigkeit von Aluminium beeinträchtigt, wird der Zirkon-Gehalt der Aluminiumlegierung auf maximal 0,25 Gew-%, bevorzugt maximal 0,2 Gew-%, bevorzugt maximal 0,05 Gew-%, besonders bevorzugt maximal 0,0015 Gew-% begrenzt. Höhere Zirkon-Gehalte beeinträchtigen die Leitfähigkeit in einem Maße, das der angestrebten Effizienzsteigerung des Thermomanagements widerspricht.

Nickel wird in Aluminiumlegierungen zur Erhöhung der Warmfestigkeit eingesetzt. Allerdings beeinträchtigt Nickel die Korrosionsbeständigkeit von Aluminiumlegierungen und ist hinsichtlich der Verfügbarkeit begrenzt. Daher wird der Nickel-Gehalt der Aluminiumlegierung auf maximal 0,2 Gew-%, bevorzugt maximal 0,05 Gew-%, besonders bevorzugt maximal 0,03 Gew-% begrenzt.

Gemäß einer weiteren, besonders leitfähigen Ausgestaltung des Batteriezellgehäuses ist die Aluminiumlegierung des Gehäusemantels aushärtbar und weist die folgende Zusammensetzung in Gew.-% auf:

$0,3 \% \leq Si \leq 0,7 \%$,
$Fe \leq 0,5 \%$,
$Cu \leq 0,45 \%$,
$Mn \leq 0,10 \%$, bevorzugt $\leq 0,05 \%$,
$0,22 \% \leq Mg \leq 0,8 \%$
$Cr \leq 0,03 \%$,
$Zn \leq 0,1 \%$,
$0,01 \% \leq Ti \leq 0,2 \%$,
$V \leq 0,03 \%$, bevorzugt $\leq 0,015 \%$,
$Zr \leq 0,05 \%$, bevorzugt $\leq 0,015\%$,
$Ni \leq 0,03 \%$, bevorzugt $\leq 0,015 \%$,
Rest Al mit unvermeidbaren Verunreinigung einzeln maximal 0,03 %, in Summe maximal 0,10 %.

Bei dieser Aluminiumlegierung ist der Magnesium-Gehalt mit 0,22 Gew.-% bis 0,8 Gew.-% mit dem Silizium-Gehalt von 0,3 Gew.-% bis 0,7 Gew.-% exakt aufeinander abgestimmt, so dass die Aluminiumlegierung eine effektive Ausscheidungshärtung durch metastabile Ausscheidungen der β-Ausscheidungssequenz ermöglicht und dadurch große Streckgrenzen $R_{p0,2}$ von mehr als 183 MPa im Temper-Zustand T6 oder T6x beispielsweise erreicht. Der Eisen-Gehalt beträgt maximal 0,5 Gew.-% und trägt im Wesentlichen zur thermischen Stabilität der mechanischen Eigenschaften des Gehäusemantels bei. Die Aluminiumlegierung dieser Ausgestaltung weist einen Mangan-Gehalt von lediglich maximal 0,10 Gew.-%, bevorzugt maximal 0,05 Gew.-% und ist als nahezu Mangan frei zu bezeichnen. Hierdurch kann erreicht werden, dass weniger quaternäre α-Al(Fe,Mn)Si-Phasen gebildet werden und mehr Silizium für die Ausscheidungshärtung zur Verfügung steht. Darüber hinaus wird der negative Einfluss von Mangan auf die elektrische wie thermische Leitfähigkeit begrenzt. Aufgrund des niedrig legierten Zustands werden nicht nur sehr hohe Streckgrenzen im Temperzustand T6 oder T6x erzielt, sondern auch besonders hohe Werte für die elektrische Leitfähigkeit. Im Hinblick auf die Einflüsse der Gehalte an Chrom, Zink, Titan, Vanadium, Zirkon und Nickel bei dieser Ausgestaltung wird auf die zuvor beschriebenen technischen Effekte verwiesen, welche bei dieser Ausgestaltung der Aluminiumlegierung ebenfalls eintreten.

Schließlich ist die Aluminiumlegierung des Gehäusemantels gemäß einer weiteren Ausgestaltung des Batteriezellgehäuses nicht aushärtbar bzw. naturhart und weist die folgende Zusammensetzung in Gew.-% auf:
$0,2 \% \leq Si \leq 0,6 \%$,

$Fe \leq 0,5 \%$,
$Cu \leq 0,45 \%$,
$1,0 \% \leq Mn \leq 1,4 \%$,
$Mg \leq 1,10 \%$, bevorzugt $\leq 0,8 \%$,
$Cr \leq 0,25 \%$,
$Zn \leq 0,4 \%$,
$Ti \leq 0,2 \%$, bevorzugt $0,01 \% \leq Ti \leq 0,2 \%$,
$V \leq 0,05 \%$,
$Zr \leq 0,25 \%$,
$Ni \leq 0,2 \%$,
Rest Al mit unvermeidbaren Verunreinigung einzeln maximal 0,05 %, in Summe maximal 0,15 %.

Bei dieser Ausgestaltung der Aluminiumlegierung trägt der Mangan-Gehalt von 1,0 Gew.-% bis maximal 1,4 Gew.-% in Kombination mit den Silizium- und Eisen-Gehalten in den angegebenen Mengen zur Ausscheidung der Partikel der quaternären α-Al(Fe,Mn)Si-Phase sowie der $Al_6$(Mn,Fe)-Phase bei. Die intermetallischen Phasen behindern Erholungs- und Rekristallisationsvorgänge und verbessern somit die thermische Stabilität der mechanischen Eigenschaften. Durch Dispersoid- und Mischkristallverfestigung können bei dieser Ausgestaltung der Aluminiumlegierung bei hoher bis sehr hoher Kaltverfestigung (H18 oder H19 Zustand) auch hohe Werte für die Streckgrenze $R_{p0,2}$ von 183 MPa erreicht werden.

Gemäß einer weiteren Ausgestaltung des Batteriezellgehäuses weist der Gehäusemantel im Falle einer aushärtbaren Ausführungsform der Aluminiumlegierung den Temperzustand T6 oder T6x auf. Dieser Temperzustand stellt bei aushärtbaren Aluminiumlegierungen sehr hohe Werte für die Streckgrenze $R_{p0,2}$ durch Ausscheidungshärtung zur Verfügung. Die Vorteile eines Batteriezellgehäuses aus einer Aluminiumlegierung in Bezug auf das Gewicht, elektrische Leitfähigkeit sowie Wärmeleitfähigkeit des Batteriezellgehäuses im Vergleich zum Batteriezellgehäuse aus Stahl sind besonders hoch.

Weist der Gehäusemantel gemäß einer nächsten Ausgestaltung mindestens einen Deckel auf, welcher mit dem Gehäusemantel kraft- und/oder stoffschlüssig verbunden ist, kann beispielsweise ein Becher zur Aufnahme der "Jelly-Roll" einer Batterierundzelle zur Verfügung gestellt werden, wobei der Deckel dann den Boden des Bechers bereitstellt. Der Deckel kann durch Tief- und/oder Streckziehen eines Bechers aus einem Aluminiumlegierungsband, aber auch durch Fließpressen aus einem Aluminiumbutzen hergestellt werden. Weitere stoffschlüssige Verbindungen können durch Löten oder Schweißen zwischen Gehäusemantel und Deckel erreicht werden, wobei der Deckel optional als separates Teil und weiter optional aus einem anderen Werkstoff, beispielsweise eine andere Aluminiumlegierung oder einem anderen Metall ausgebildet sein kann. Kraftschlüssige Verbindungen zwischen dem Gehäusemantel und dem Deckel können auch durch Vercrimpen des Deckels mit dem Gehäusemantel erreicht werden. Schließlich kann das Batteriezellgehäuse mit einem weiteren Deckel aus einer Aluminiumlegierung oder einem anderen Werkstoff nach Anordnung der Jelly-Roll im becherförmigen Gehäusemantel verschlossen werden. Auch hier kann eine kraft- und/oder stoffschlüssige Verbindung zwischen dem zweiten Deckel und dem Gehäusemantel vorgesehen sein.

Gemäß einem weiteren Aspekt wird die aufgezeigte Aufgabe auch für die Verwendung einer Aluminiumlegierung zur Herstellung eines erfindungsgemäßen Batteriezellgehäuses dadurch gelöst, dass ein Aluminiumlegierungsband oder -blech aus einer Aluminiumlegierung zu einem Rohr oder Becher tief- und/oder streckgezogen wird. Tief- und/oder Streckziehen sind wirtschaftliche Verfahren zur Herstellung von hoch präzisen Rohren oder Bechern aus einem Aluminiumlegierungsband oder -blech. Diese Verwendung einer Aluminiumlegierung ist damit besonders gut geeignet, erfindungsgemäße Batteriezellgehäuse als Massenprodukte bereitzustellen.

Gemäß einer vorteilhaften Ausführungsform der Verwendung weist das Aluminiumlegierungsband oder -blech vor dem Tief- und/oder Streckziehen den Zustand H18, H19 auf. Hierdurch können auch nach dem Streck- und/oder Tiefziehen des Rohrs oder Bechers höchste Werte für die Streckgrenze $R_{p0,2}$ erreicht werden und erfindungsgemäße Batteriezellgehäuse auch aus nicht aushärtbaren bzw. naturharten Aluminiumlegierungen hergestellt werden. Insofern können Batteriezellgehäuse aufweisend eine erfindungsgemäße nicht aushärtbare bzw. naturharte Aluminiumlegierung mit Werten für die Streckgrenze $R_{p0,2}$ von mindestens 183 MPa aus einer konventionellen Aluminiumlegierung auch für große Zelldurchmesser bereitgestellt werden.

Besteht das Aluminiumlegierungsband oder -blech nach einer Ausgestaltung der Verwendung eines Aluminiumlegierungsbandes aus einer aushärtbaren Aluminiumlegierung und weist das Aluminiumlegierungsband vor dem Tief- und/oder Streckziehen den Zustand T4 auf, so kann das Tief- und/oder Streckziehen erleichtert und größere Umformgrade realisiert werden. Die hohen Werte für die Streckgrenze des erfindungsgemäßen Batteriezellgehäuses werden dann durch ein Aushärten in den Zustand T6 oder T6x, beispielsweise durch Tempern für 30 Minuten bei 205 °C erreicht. Zur Optimierung der elektrischen wie auch der thermischen Leitfähigkeit ist weiterhin eine gezielte Überalterung in den Zustand T7 oder T7x denkbar und kann eine hinreichend hohe Streckgrenze $R_{p0,2}$ von mindestens 183 MPa bereitstellen.

Gemäß einer alternativen Verwendung des Aluminiumlegierungsbands oder -blechs wird der Gehäusemantel des Batteriezellgehäuses durch Längsnahtschweißen eines Rohrs aus einem Aluminiumlegierungsband oder -blech hergestellt. Vorzugsweise ist das Rohr aus einem Aluminiumlegierungsband mit der erfindungsgemäßen Zusammensetzung rollgeformt. Auch hierdurch kann eine besonders wirtschaftliche Verwendung eines Aluminiumbands oder -blechs zur Herstellung eines erfindungsgemäßen Batteriezellgehäuses bereitgestellt werden.

Schließlich wird gemäß einer alternativen Verwendung einer Aluminiumlegierung der Gehäusemantel optional zusammen mit einem Deckelbereich aus einer Aluminiumlegierungsbutze fließgepresst. Alternativ kann der Gehäusemantel des Batteriezellgehäuses auch durch Strangpressen eines Rohres mit nachfolgendem optionalen Streckziehen des Rohrs hergestellt werden. Beide Verfahren stellen Verwendungen von Aluminiumlegierungen dar, die eine sehr wirtschaftliche Produktion hoch präziser Batteriezellgehäuse aus einer Aluminiumlegierung mit vorteilhaften Eigenschaften in Bezug auf Wärmeleitfähigkeit und Gewicht ermöglichen.

Im Weiteren soll die Erfindung in Verbindung mit der Zeichnung und den Ausführungsbeispielen näher erläutert werden. Die Zeichnung zeigt in

Fig. 1 in einer schematischen Ansicht zwei unterschiedliche Verwendungen einer Aluminiumlegierung zur Herstellung eines Batteriezellgehäuses einer Batterierundzelle und

Fig. 2 in einer schematischen Ansicht eine weitere Verwendung einer Aluminiumlegierung zur Herstellung eines Batteriegehäuses einer Batterierundzelle.

Ausgangspunkt der Untersuchungen ist die bekannte Verwendung eines Stahls des Typs AISI 1020 zur Herstellung eines Batteriezellgehäuses einer Batterierundzelle. Großformatige Rundzellen des Typs 4680 beispielsweise erhöhen die Anforderungen an die Wärmeabfuhr aus dem Inneren der Batterierundzelle, wobei die geometrischen Möglichkeiten bei Batterierundzellen da begrenzt sind. Dabei führen größere Zellhöhen und insbesondere Zelldurchmesser zu einer Verringerung des Oberflächen-Volumenverhältnisses, wodurch die Wärmeabfuhr stark beeinträchtigt sein kann. Der Einsatz von Aluminiumlegierungen bietet jedoch gegenüber Stahl deutlich bessere elektrische und thermische Leitfähigkeiten, so dass die entstehende Reaktionswärme und ohmsche Wärme über das Gehäuse effizienter abgeführt werden können und dadurch ein Performancegewinn gerade durch ein besseres Thermomanagement erwartet werden kann. Darüber hinaus reduziert die gute elektrische Leitfähigkeit von Aluminium die Wärmeentwicklung durch die Reduktion des ohmschen Widerstands der Zelle, da das Gehäuse bei zylindrischen Zellen stromdurchflossen ist und einen Pol der Zelle darstellt.

Im Gegensatz dazu stehen die höheren mechanischen Anforderungen an das Batteriezellgehäuse von Batterierundzellen mit Durchmessern von mehr als 15 mm, insbesondere mehr als 20 mm oder mehr als 22 mm. Um diese sicherzustellen, muss eine höhere Wandstärke des Batteriezellgehäuses, insbesondere des Gehäusemantels in Kauf genommen werden. Eine höhere Wandstärke verkleinert jedoch den Platz für die "Jelly-Roll", so dass die Wickellänge sich verkürzt und die Elektrodenfläche sich verkleinert. Aus dem Wickellängenverhältnis lässt sich daher ein Verlust oder Gewinn an Energiekapazität des Batteriezellgehäuses abschätzen.

Die Auslegung der Wandstärke des Gehäusemantels kann unter Verwendung der aus der Elastostatik bekannten Kesselformel

$$\sigma_{\varphi} = p \cdot R_i / s \qquad (1)$$

mit $\sigma_{\varphi}$: Spannungskomponente in Umfangsrichtung, $p$: Innendruck, $R_i$: Innenradius, $s$: Wandstärke unter Verwendung der Vergleichsspannung nach Tresca

$$\sigma_{V,\mathrm{Tresca}} = \sigma_{\max} - \sigma_{\min} = \sigma_{\varphi} - 0 = p \cdot R_i / s \qquad (2)$$

mit der Bedingung

$$\sigma_{V,\mathrm{Tresca}} \leq R_{p0,2} \qquad (3)$$

vorgenommen werden.

Darüber hinaus ergibt sich unter Annahme eines gleichen maximalen Innendrucks

$$p = R_{p0,2,\mathrm{Al}} \cdot s_{\mathrm{Al}} / R_{i,\mathrm{Al}} = R_{p0,2,\mathrm{St}} \cdot s_{\mathrm{St}} / R_{i,\mathrm{St}} \qquad (4)$$

und der Annahme des gleichen Innenradius $R_i$ der Zellen somit

$$R_{p0,2,\mathrm{Al}} \cdot s_{\mathrm{Al}} = R_{p0,2,\mathrm{St}} \cdot s_{\mathrm{St}}, \qquad (5)$$

so dass sich das Wandstärkenverhältnis $\delta$ aus dem genannten
Streckgrenzenverhältnis berechnen lässt zu:

$$\delta = s_{\mathrm{Al}} / s_{\mathrm{St}} = R_{p0,2,\mathrm{St}} / R_{p0,2,\mathrm{Al}}. \qquad (7)$$

Das Wandstärkenverhältnis $\delta$ in Bezug auf Stahl ist ein Maß für die Zunahme der Wandstärke des Batteriezellgehäuses bei der Substitution von Stahl durch Aluminium und kann insbesondere verwendet werden, um verschiedene Aluminiumlegierungsbänder oder -bleche miteinander zu vergleichen.

Für einen vorgegebenen Innendruck kann für ein Batteriezellgehäuse einer Batterierundzelle aus Stahl des Typs AISI1020 eine minimale Wandstärke ermittelt werden, bei welcher die oben genannten Bedingungen erfüllt sind. Da zylindrische Sekundärbatterien, insbesondere Lithium-Ionen-Batterien üblicherweise mit Druckentlastungs-Mechanismen ausgestattet sind, die bei etwa 2 MPa aktiviert werden, wurde im vorliegenden Fall unter Berücksichtigung eines Sicherheitsfaktors von 4,5 mit einem Innendruck $p = 9\ MPa$ gerechnet, um ein seitliches Aufreißen der Batterie in Verbindung mit vorzusehenden Stromunterbrechungs- und Druckentlastungsmechanismen sicher auszuschließen. Dies stellt einen üblichen Wert für benötigte Innendruckstabilität dar. Unter Verwendung dieser minimalen Wandstärke des Gehäusemantels kann unter der Annahme einer konstanten Größe des Wickelkerns und einer festgelegten Dicke einer Lage der "Jelly-Roll" der Batterie bestehend aus Separatoren, Aktivmaterialien und Stromableiterfolie die Wickellänge W der "Jelly-Roll" wie folgt berechnet werden:

$$A = d_{Jelly-Roll} \cdot W = \frac{\pi}{4} \cdot ((D_{Batterie} - 2 \cdot d_{Mantel})^2 - D_{Innen}^2) \qquad (8)$$

mit

$A$: Fläche des Wickelspiegels,
$d_{Jelly-Roll}$: Dicke des zur Jelly-Roll gewickelten Folienstapels,
$W$: Wickellänge
$D_{Batterie}$: Außendurchmesser des Batteriezellgehäuse,
$d_{Mantel}$: Dicke bzw. Wandstärke des Gehäusemantels
$D_{Innen}$: Innendurchmesser des Wickelspiegels

Der Jelly-Roll-Folienstapel besteht vorliegend aus Separatorfolien, Kathoden-Stromableiterfolie, die mit dem Kathoden-Aktivmaterial beschichtet ist, und Anoden-Stromableiterfolie, die mit dem Anoden-Aktivmaterial beschichtet ist.
Aus der möglichen Wickellänge der Jelly-Roll abhängig von der Wandstärke des Batteriezellgehäuses bei vorgegebenem Außendurchmesser lässt sich der Kapazitätsverlust bei Batteriezellgehäusen mit einem Gehäusemantel, der zumindest teilweise aus einer Aluminiumlegierung besteht, für verschiedene Werte für die Streckgrenze Rp0,2 des Gehäusemantels über das Wickellängenverhältnis abschätzen.

Das Wickellängenverhältnis $\dfrac{W_{Al}}{W_{Stahl}}$ lässt sich dafür wie folgt berechnen:

$$\frac{W_{Al}}{W_{Stahl}} = \frac{\left((D_{Batterie} - 2\,d_{Al})^2 - D_{Innen}^2\right)}{\left((D_{Batterie} - 2\,d_{St})^2 - D_{Innen}^2\right)} \qquad (9)$$

mit

$d_{Al}$: Dicke des Gehäusemantels bei Verwendung des jeweiligen Aluminiumwerkstoffes
$d_{Stahl}$: Dicke des Gehäusemantels bei Annahme eines Stahls mit $R_{p02,St}$ = 350MPa.

Es zeigte sich, dass bei Rundzellen des Typs 4680 mit 46 mm Außendurchmesser des Batteriezellgehäuses und einem Gehäusemantel, welcher aus einer Aluminiumlegierung besteht, die Streckgrenze $R_{p0,2}$ des Gehäusemantels mindestens 183 MPa, vorzugsweise mindestens 220 MPa, besonders bevorzugt mindestens 250 MPa betragen muss, um mögliche Kapazitätsverluste unter 5 % zu drücken. Das erfindungsgemäße Batteriezellgehäuse kann daher gerade bei großformatigen Batterierundzellen mit Durchmessern von mehr als 15mm, bevorzugt mehr als 20 mm oder mehr als 22 mm mit akzeptablen Kapazitätsverlusten Vorteile in Bezug auf ein verbessertes Thermomanagement und ein verringertes Gewicht bereitstellen.
Es wurden nun verschiedene Aluminiumlegierungen aus unterschiedlichen Fertigungen hinsichtlich ihrer Eignung zur Bereitstellung eines Batteriezellgehäuses hin untersucht. Diese sind in Tabelle 1 angegeben. Mit E sind erfindungsgemäße Ausführungsbeispiele und mit V nicht erfindungsgemäße Vergleichsbeispiele bezeichnet.

Tabelle 1

| Nr | Typ | Si | Fe | Cu | Mn | Mg | Cr | Zn | Ti | V | Zr | Ni |
|----|-----|------|------|------|-------|------|-------|-------|------|------|-------|-------|
| 1 | V | 0.08 | 0.23 | 0.01 | <0.01 | 0.01 | <0.01 | 0.02 | 0.01 | 0.01 | <0.01 | <0.01 |
| 2 | E | 0.25 | 0.59 | 0.18 | 0.84 | 1.03 | 0.01 | 0.04 | 0.02 | 0.01 | <0.01 | <0.01 |
| 3 | E | 0.23 | 0.59 | 0.18 | 0.82 | 1.03 | 0.01 | 0.04 | 0.03 | 0.01 | <0.01 | <0.01 |
| 4 | V | 0.20 | 0.53 | 0.14 | 1.05 | <0.01 | <0.01 | <0.01 | 0.02 | <0.01 | <0.01 | <0.01 |

(fortgesetzt)

| Nr | Typ | Si | Fe | Cu | Mn | Mg | Cr | Zn | Ti | V | Zr | Ni |
|---|---|---|---|---|---|---|---|---|---|---|---|---|
| 5 | E | 0.5 | 0.15 | <0.01 | <0.01 | 0.47 | <0.01 | <0.01 | 0.01 | 0.01 | <0.01 | <0.01 |
| 6 | E | 0.44 | 0.11 | 0.24 | <0.01 | 0.44 | <0.01 | <0.01 | <0.01 | <0.01 | <0.01 | <0.01 |
| 7 | E | 0.47 | 0.12 | <0.01 | <0.01 | 0.46 | <0.01 | <0.01 | <0.01 | <0.01 | 0.18 | <0.01 |
| 8 | E | 0.47 | 0.12 | 0.25 | <0.01 | 0.40 | <0.01 | <0.01 | <0.01 | <0.01 | 0.07 | <0.01 |
| 9 | E | 0.50 | 0.12 | <0.01 | <0.01 | 0.47 | <0.01 | <0.01 | <0.01 | <0.01 | <0.01 | 0.19 |
| 10 | E | 0.88 | 0.33 | 0.10 | 0.54 | 0.87 | 0.01 | 0.02 | 0.03 | <0.01 | <0.01 | <0.01 |
| 11 | E | 0.72 | 0.21 | 0.10 | 0.07 | 0.59 | <0.01 | <0.01 | 0.02 | <0.01 | <0.01 | <0.01 |
| 12 | E | 1.1 | 0.25 | 0.045 | 0.07 | 0.42 | <0.01 | 0.01 | 0.02 | 0.02 | <0.01 | <0.01 |
| 13 | E | 0.25 | 0.50 | 0.16 | 1.08 | 0.02 | 0.04 | <0.01 | 0.02 | <0.01 | <0.01 | <0.01 |
| 14 | E | 0.6 | 0.28 | 0.44 | 1.36 | 0.25 | 0.11 | <0.01 | 0.02 | <0.01 | <0.01 | <0.01 |
| *Alle Angaben in Gew.-%, Rest Al, unvermeidbare Verunreinigungen einzeln max. 0,03 Gew. % in Summe max. 0,1 Gew.-% | | | | | | | | | | | | |

In Tabelle 2 sind zu den verschiedenen Ausführungsbeispielen Angaben zum Herstellungsweg angegeben. Um eine Probennahme für Zugprüfungen im Vergleich zu stranggepressten Rohrmustern zu erleichtern, weisen die untersuchten Ausführungsbeispiele dabei zum Teil Enddicken auf, welche für Batteriezellgehäuse nicht geeignet sind, z.B. Beispiele 6 bis 10. Es wird erwartet, dass die Wandstärken des Gehäusemantels eines Batteriezellgehäuses einer Batterierundzelle mit Durchmessern von mehr als 15 mm, mehr als 20 mm, bevorzugt mehr als 22mm vorzugsweise zwischen 0,5 mm und 2,5 mm, vorzugsweise bis 1,5 mm betragen, vorzugsweise 0,7 mm bis 1,2 mm. Grundsätzlich denkbar sind aber auch Wandstärken oberhalb von 2,5 mm und unterhalb von 0,5 mm in Abhängigkeit des Zelldurchmessers, der gemäß (1) proportional zur Spannungskomponente in Umfangsrichtung ist.

Allerdings wird davon ausgegangen, dass trotz der zum Teil großen Unterschiede zur am Batteriezellgehäuse notwendige Wandstärke (z.B. Beispiele 6 bis 10) die Messwerte der Streckgrenze $R_{p0,2}$ ohne Weiteres auch in dem oben genannten Dickenbereich erreicht werden, indem das Processing insbesondere die Lösungsglühung und die Warmauslagerung der Aluminiumlegierung auf die zu erzielende Enddicke eingerichtet wird. Da die Streckgrenzwerte $R_{p0,2}$ dickenunabhängig sind und durch die Zusammensetzung und das Mikrogefüge des Werkstoffs inklusive des Temperzustands bestimmt werden, lassen sich die hier ermittelten Ergebnisse auch auf die geforderten Wandstärken übertragen. Alle mechanischen Kennwerte für $R_{p0,2}$ und $R_m$ beziehen sich auf Werte gemäß DIN EN 6892.

Tabelle 2

| Nr | Ty | Endicke [mm] | Zustand | Warm banddicke [mm] | Zwischenglühung | Finaler Abwalzgrad | Abschlussglühung |
|----|----|----|----|----|----|----|----|
| 1 | V | 0.8 | H14 | 2.3 | - | 59% | - |
| 2 | E | 0.95 | H24 | 2.3 | - | 59% | Coilglühung 250°C |
| 3 | E | 0.5 | H19 | 2.3 | - | 78% | - |
| 4 | v | 1.0 | H14 | 7 | Coilglühung 400°C an 1.39mm | 28% | - |
| 5 | E | 0.5 | H19 | | - | 90% | |
| 6 | E | 10 | Stranggepresst T6 | | Lösungsglühung an 10mm | | Auslagerung 16h @ 165°C |
| 7 | E | 10 | Stranggepresst T6 | | Lösungsglühung an 10mm | | Auslagerung 16h @ 165°C |
| 8 | E | 10 | Stranggepresst T6 | | Lösungsglühung an 10mm | | Auslagerung 16h @ 165°C |
| 9 | E | 10 | Stranggepresst T6 | | Lösungsglühung an 10mm | | Auslagerung 16h @ 165°C |
| 10 | E | 2.5 | T6 | | Lösungsglühung an 2.5mm | | Coilglühung 180°C |
| 11 | E | 1.0 | T6 | | Lösungsglühung an 1.0mm | | Auslagerung 30min @ 205°C |
| 12 | E | 1.0 | T64 | | Lösungsglühung an 1.0mm | | Auslagerung 2% Recken + 20 185°C |
| 13 | E | 1.1 | H19 | 7 | | 84% | |
| 14 | E | 1.5 | H24 | 7 | | 79% | Coilglühung 250°C |

In Tabelle 2 wurden Beispiele 1 bis 4 sowie 10 bis 14 ausgehend von einem DC-Walzbarrenguss mit Homogenisierung bei konventionellen Bedingungen an Enddicke warm- und kaltgewalzt. Das Homogenisieren erfolgte bei einer Temperatur zwischen 480 °C bis 620 °C für eine Dauer von mindestens 0,5 h. Das Warmwalzen des Walzbarrens zu einem warmgewalzten Band erfolgte bei einer Temperatur zwischen 280 °C und 550 °C, wobei die Warmbandtemperatur nach dem letzten Warmwalzstich zwischen 280 °C und 380 °C betrug. Die Warmbanddicke, d.h. die Dicke des warmgewalzten Bands, lag zwischen 2 mm und 10 mm. Das Kaltwalzen des Aluminiumlegierungsbands oder -blechs erfolgte in mehreren Stichen.

Das Beispiel 5 wurde über Doppelwalzengießen mit anschließendem Kaltwalzen mit Zwischenglühung bei 165 °C nach dem ersten Walzstich von 15% hergestellt. Die Beispiele 2, 3, 13 und 14 stellen erfindungsgemäße Ausführungsbeispiele für nicht aushärtbare bzw. naturharte Aluminiumlegierungen für das Batteriezellgehäuse, insbesondere den Gehäusemantel, dar. Die nicht erfindungsgemäßen Vergleichsbeispiele 1 und 4 bestehen ebenfalls aus nicht aushärtbaren bzw. naturharten Aluminiumlegierungen.

Die erfindungsgemäßen Ausführungsbeispiele 6 bis 12 weisen aushärtbare AlMgSi-Legierungen auf. Diese wurden nach dem Warm- und Kaltwalzen an Enddicke bzw. dem Strangpressen auf Endgeometrie durch Lösungsglühen und Abschrecken in den Zustand T4 gebracht. Anschließend erfolgte eine Wärmebehandlung in Form einer Glühung bzw. eine Warmauslagerung, um die Ausführungsbeispiele in den Zustand T6 oder in den Zustand T6x, hier in den Zustand T64 durch zusätzliches Recken mit 2% zu überführen. Denkbar ist hier auch die Überführung in den Zustand T7 oder T7x. An den aus unterschiedlichen Aluminiumlegierungen bestehenden und mit unterschiedlichen Verfahrensschritten hergestellten Beispielen wurde die erzielbare Streckgrenzwerte $R_{p0,2}$ gemessen, mit welcher eine Wandstärkeberechnung respektive eine Berechnung eines Wickellängenverhältnis im Vergleich zum Batteriezellgehäuse aus Stahl AISI 1020 durchgeführt wurden.

Ferner wurden für die verschiedenen Werkstoffe die elektrische Leitfähigkeit in MS/m und (%IACS) mittels Wirbelstromprüfung nach DIN EN 2004-1 1993-09 ermittelt. Anhand der elektrischen Leitfähigkeit $\sigma$ kann unter Berücksichtigung des Wiedemann-Franz-Gesetzes

$$\lambda = L \cdot \sigma \cdot T \qquad\qquad (10)$$

mit

$$L = 2,00 \cdot 10^{-8}\ W\Omega K^{-2}$$

(Lorentzzahl für Aluminium bei Raumtemperatur: Quelle: Aluminium Taschenbuch Band 1, 16. Auflage, Aluminium-Verlag)

$\sigma$: elektr. Leitfähigkeit,
T: Temperatur (Raumtemperatur angenommen mit 25 °C)

die thermische Leitfähigkeit $\lambda$ berechnet werden. Für den Referenzwerkstoff Stahl AISI 1020 liegt die thermische Leitfähigkeit bei ca. 67 W/mK bei Raumtemperatur. Die Ergebnisse der Berechnungen sind in Tabelle 3 wiedergegeben. Alle Aluminiumlegierungen liegen erwartungsgemäß in Bezug auf die elektrische und thermische Leitfähigkeit deutlich oberhalb des Referenzwertes für Stahl des Typs AISI 1020. Das Vergleichsbeispiel 1 zeigt dagegen eine unzureichende Streckgrenze von 100 MPa, woraus sich ein Außendurchmesser/Wandstärkenverhältnis von 23,71 bei einem angenommenen, zu realisierenden Innendruck von 9 MPa ergibt. Die hieraus resultierende notwendige Wandstärke für beispielsweise Batteriezellgehäuse für den Typ 4680 mit 46 mm Außendurchmesser führt zu deutlichen Kapazitätsverlusten bezogen auf die erreichbare Wickellänge der Jelly-Roll, so dass die Vorzüge einer hervorragenden elektrischen wie thermischen Leitfähigkeit nicht ausgenutzt werden können. Dagegen zeigen die erfindungsgemäßen Ausführungsbeispiele 2 und 3 deutlich geringere Verluste in Bezug auf die Wickellänge. Die Ausführungsbeispiele 2 und 3 weisen noch akzeptable elektrische und thermische Leitfähigkeiten auf. Aufgrund des großen Unterschieds in diesen Parametern zum Werkstoff Stahl AISI 1020 ist dennoch von einer Eignung für großformatige Batteriezellgehäuse auszugehen.

Das Vergleichsbeispiel 4, das den für prismatische Batteriedosen häufig eingesetzten Werkstoff AA3003 H14 repräsentiert, weist ebenfalls eine zu geringe Streckgrenze $Rp_{0,2}$ auf und führt unter Berücksichtigung der notwendigen Wandstärke zu einem signifikanten Verlust an Wickellänge, so dass das Vergleichsbeispiel im Zustand H14 nicht für ein erfindungsgemäßes Batteriezellgehäuse geeignet ist. Das Ausführungsbeispiel 13 weist eine nahezu identische Aluminiumlegierung wie das Vergleichsbeispiel 4 aufgrund des unterschiedlichen Werkstoffzustands H19 auf. Aufgrund der guten Verarbeitungseigenschaften dieser Aluminiumlegierung können aber auch Batteriezellgehäuse mit geringen Wickellängenverlusten hergestellt werden.

Die erfindungsgemäßen Ausführungsbeispiele 5 bis 9 zeigen durchgehend hohe Festigkeiten, wobei Ausführungsbeispiel 5 im Zustand H19 über Doppelwalzengießen mit anschließendem Kaltwalzen mit Zwischenglühung bei 165 °C nach dem ersten Walzstich von 15% hergestellt wurde und die Ausführungsbeispiele 6 bis 9 über Strangpressen hergestellt wurden. Die stranggepressten Varianten wurden im Zustand T6 vermessen. Deutlich sind die festigkeitssteigernden Eigenschaften von Kupfer im Vergleich zu Zugaben von Zirkon aus dem Vergleich von Ausführungsbeispiel 6 und 7 zu erkennen. Auch Nickel, wie in Ausführungsbeispiel 9 gezeigt, führt zu einer Steigerung der Streckgrenzen $R_{p0,2}$.

Die höchsten Streckgrenzwerte ergaben sich im Ausführungsbeispiel 10 hergestellt unter Verwendung der DC-Barrenguss-Route mit Warm- und Kaltwalzen sowie Lösungsglühen in einem Durchlaufofen. Hier fand die Überführung in den Zustand T6 durch eine Coil-Glühung für 4h bei 180 °C statt. Mit einem Aluminiumlegierungsband nach dem Ausführungsbeispiel 10 ergaben sich geringste Wickellängenverluste von unter 1,5 %. Die weniger festen Varianten der Aluminiumlegierung von Ausführungsbeispiel 11 und 12 runden die Gruppe der Aluminiumlegierungen AlMgSi, Ausführungsbeispiele 5 bis 12, ab und zeigen, dass auch diese Aluminiumlegierungen für die Herstellung von erfindungsgemäßen Batteriezellgehäusen geeignet sind.

Aufgrund der unterschiedlichen Verarbeitungseigenschaften der Aluminiumlegierungen ergeben sich unterschiedliche mögliche Verwendungen der Aluminiumlegierungen zur Herstellung der Batteriezellgehäuse, die im Weiteren anhand der Zeichnung näher erläutert werden sollen.

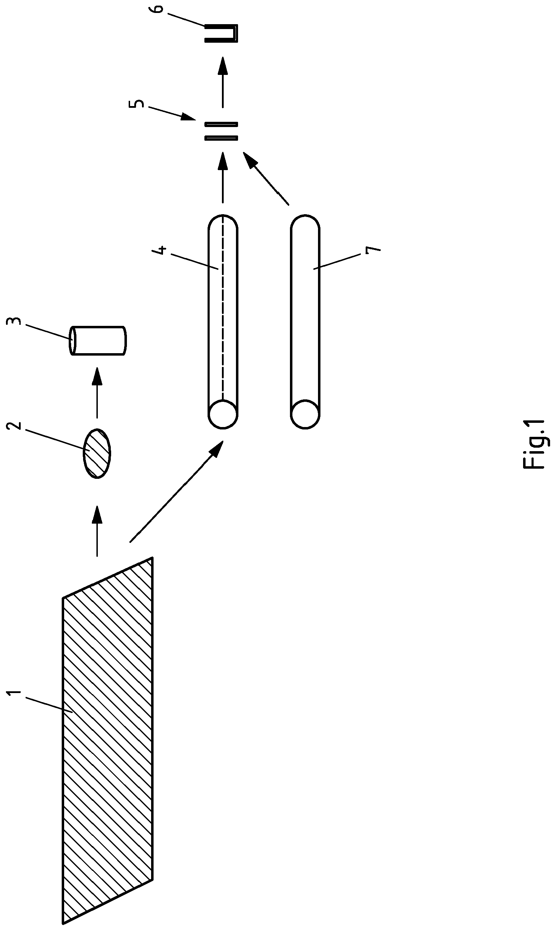

Fig. 1 zeigt nun bereits 3 verschiedene Verwendungen von Aluminiumlegierungen zur Herstellung von Batteriezellgehäusen. Zunächst ist ein Aluminiumlegierungsband 1 dargestellt, das durch Gießen eines Walzbarrens zum Beispiel nach dem DC-Gussverfahren, aber auch nach einem Gießwalzverfahren mit anschließendem Warm- und/oder Kaltwalzen hergestellt werden kann. Aus dem Band 1 hergestellte Zuschnitte 2 werden in nicht dargestellten Tief- und/oder Streckziehwerkzeugen zu Rohren, aber vor allem zu zylindrischen Bechern 3 gezogen, in welche die nicht dargestellte "Jelly-Roll" eingebracht werden kann.

Gemäß einer weiteren dargestellten Verwendung wird das Aluminiumlegierungsband beispielsweise durch Rollformen und anschließendes Schweißen in ein längsnahtgeschweißtes Rohr 4 umgeformt. Aus diesem kann dann der Gehäusemantel des Batteriezellgehäuses als Rohrabschnitt 5 abgetrennt werden. Anschließend kann der Rohrabschnitt 5 noch mit einem Deckel 6 versehen werden, um eine "Jelly-Roll" aufnehmen zu können. Der Deckel 6 ist stoff- oder kraftschlüssig mit dem Rohr oder Rohrabschnitt 5 verbunden, beispielsweise durch Löten, Schweißen oder Krimpen.

Als dritte Verwendung wird ein stranggepresstes Rohr 7 hergestellt. Dieses wird in der Regel noch auf Maß streckgezogen. Anschließend können ebenfalls Rohrabschnitte 5 mit einem Deckel 6 versehen werden.

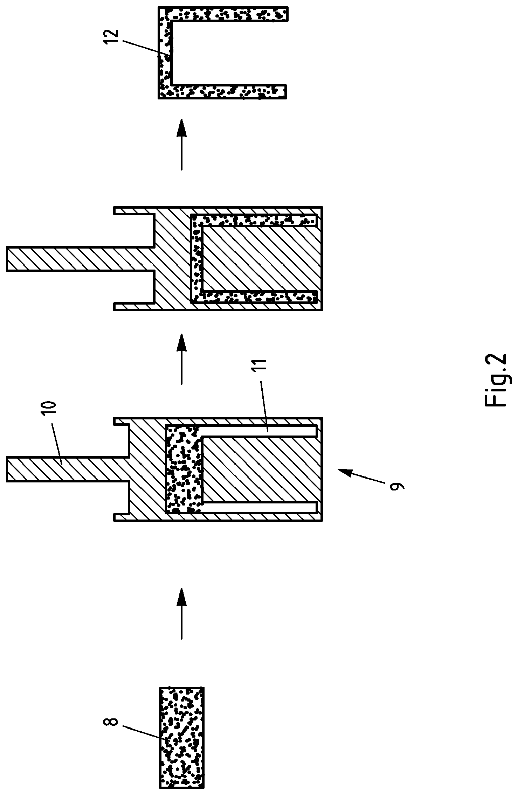

Schließlich zeigt Fig. 2 schematisch die Verwendung einer Aluminiumlegierung zur Herstellung eines Batteriezellgehäuses durch Fließpressen einer Aluminiumlegierungsbutze 8 in einer Fließpresse 9 mit einem Stempel 10 und einer Matrize 11. Der fertige Gehäusemantel 12 mit Deckel ist hochpräzise und kann ebenfalls als Massenware hergestellt werden. Allerdings kann mit dem Fließpressen ohne Weiteres auch ein Rohrabschnitt, also ohne Deckel, hergestellt werden. Die Verarbeitung von Rohrabschnitten 5 zu Batteriezellgehäusen von Rundzellen ist zu Fig. 1 beschrieben.

Tabelle 3

| Nr | Typ | $R_{p02}$ [MPa] | $R_m$ [MPa] | elektr. Leitfähigkeit [MS/m] (%IACS) | berechnete therm. Leitfähigkeit [W/mK] (25°C) | Wandstärkenverhältnis zu Stahl (AISI 1020) | berechnete Wandstärke für 4680 Geometrie mit 9 MPa innendruck ($\sigma_\varphi$ = $R_{p02}$ - 2MPa) | Resultierender Innendurchmesser (mm) | Außendurchmesser / Wandstärke (4680 Format und 9 MPa Innendruck mit $\sigma_\varphi$ = $R_{p02}$ - 2MPa) | WickellängenVerhältnis im Vergleich zu Stahl (46mm Durchmesser, 4mm Spule) |
|---|---|---|---|---|---|---|---|---|---|---|
| 1 | > | 100 | 105 | 36.7 (63.2) | 219 | 3.5 | 1,94 | 42,120 | 23,71 | 0,881 |
| 2 | E | 190 | 225 | 24.2 (41.7) | 144 | 1.84 | 1,050 | 43,900 | 43,81 | 0,958 |
| 3 | E | 274 | 302 | 22.4 (38.6) | 134 | 1.287 | 0,736 | 44,528 | 62,50 | 0,986 |
| 4 | > | 157 | 168 | 28.5 (49.1) | 170 | 2.22 | 1,265 | 43,470 | 36,36 | 0,939 |
| 5 | E | 258 | 268 | 32.4 (55.9) | 193 | 1.365 | 0,780 | 44,440 | 58,97 | 0,982 |
| 6 | E | 251 | 278 | 32.3 (55.7) | 193 | 1.39 | 0,802 | 44,396 | 57,36 | 0,980 |
| 7 | E | 228 | 245 | 31.5 (54.3) | 188 | 1.543 | 0,879 | 44,242 | 52,33 | 0,973 |
| 8 | E | 246 | 276 | 31.3 (53.9) | 187 | 1.42 | 0,818 | 44,364 | 56,23 | 0,978 |
| 9 | E | 249 | 277 | 32.2 (55.5) | 192 | 1.41 | 0,810 | 44,380 | 56,79 | 0,979 |
| 10 | E | 287 | 345 | 26.8 (46.2) | 160 | 1.22 | 0,704 | 44,592 | 65,34 | 0,989 |
| 11 | E | 201 | 249 | 28.7 (49.5) | 171 | 1.74 | 0,993 | 44,014 | 46,32 | 0,963 |
| 12 | E | 183 | 256 | 26.7 (46.0) | 159 | 1.91 | 1,090 | 43,820 | 42,20 | 0,955 |
| 13 | E | 218 | 238 | 26.2 (45.2) | 156 | 1.61 | 0,922 | 44,156 | 49,89 | 0,969 |
| 14 | E | 226 | 256 | 30.2 (52.1) | 177 | 1.55 | 0,888 | 44,224 | 51,80 | 0,973 |

*Referenzwert Stahl AISI 1020: $R_{p0,2}$ = 350 MPa, Referenzwandstärke Batteriezellgehäuse 4680 Geometrie: 0,58 mm

**Patentansprüche**

1. Batteriezellgehäuse einer Batterierundzelle aufweisend einen zylindrischen Gehäusemantel mit einem Außendurchmesser von mehr als 15 mm, bevorzugt mehr als 20 mm, besonders bevorzugt mehr als 22 mm,
   **dadurch gekennzeichnet, dass**
   der Gehäusemantel zumindest teilweise aus einer Aluminiumlegierung besteht, und die Streckgrenze $R_{p0,2}$ des Gehäusemantels mindestens 183 MPa, vorzugsweise mindestens 220 MPa, besonders bevorzugt mindestens 250 MPa beträgt.

2. Batteriezellgehäuse nach Anspruch 1,
   **dadurch gekennzeichnet, dass**
   der Gehäusemantel des Batteriezellgehäuses eine Wandstärke aufweist, welche die folgende Relation erfüllt: Außendurchmesser/Wandstärke > 41,5, bevorzugt > 47,5, besonders bevorzugt > 55,0.

3. Batteriezellgehäuse nach Anspruch 1 oder 2,
   **dadurch gekennzeichnet, dass**
   der Gehäusemantel eine elektrische Leitfähigkeit von mehr als 25 MS/m, bevorzugt mehr als 28 MS/m, besonders bevorzugt mehr als 30 MS/m aufweist.

4. Batteriezellgehäuse nach einem der Ansprüche 1 bis 3,
   **dadurch gekennzeichnet, dass**
   die mindestens eine Aluminiumlegierung des Gehäusemantels die folgende Zusammensetzung in Gew.-% aufweist:

   $0,2\ \% \leq Si \leq 2,0\ \%$,
   $Fe \leq 0,5\ \%$,
   $Cu \leq 0,8\ \%$,
   $Mn \leq 1,4\ \%$,
   $Mg \leq 2,0\ \%$,
   $Cr \leq 0,25\ \%$,
   $Zn \leq 0,4\ \%$,
   $Ti \leq 0,2\ \%$,
   $V \leq 0,05\ \%$,
   $Zr \leq 0,25\ \%$,
   $Ni \leq 0,2\ \%$,
   Rest Al mit unvermeidbaren Verunreinigung einzeln maximal 0,05 %, in Summe maximal 0,15 %.

5. Batteriezellgehäuse nach einem der Ansprüche 1 bis 4,
   **dadurch gekennzeichnet, dass**
   die Aluminiumlegierung des Gehäusemantels die folgende Zusammensetzung in Gew.-% aufweist:

   $0,2\ \% \leq Si \leq 1,5\ \%$, bevorzugt $0,3\ \% \leq Si \leq 1,3\ \%$,
   $Fe \leq 0,5\ \%$,
   $Cu \leq 0,6\ \%$, bevorzugt $\leq 0,45\ \%$
   $Mn \leq 1,4\ \%$, bevorzugt $1,0\ \% \leq Mn \leq 1,4\ \%$, weiter bevorzugt $Mn \leq 0,6\ \%$,
   $Mg \leq 1,5\ \%$, bevorzugt $0,2\ \% \leq Mg \leq 1,5\ \%$,
   $Cr \leq 0,25\ \%$, bevorzugt $\leq 0,15\ \%$,
   $Zn \leq 0,25\ \%$,
   $0,01\ \% \leq Ti \leq 0,20\ \%$,
   $V \leq 0,05\ \%$, bevorzugt $\leq 0,03\ \%$
   $Zr \leq 0,20\ \%$, bevorzugt $\leq 0,05\ \%$,
   $Ni \leq 0,05\ \%$, bevorzugt 0,03 %
   Rest Al mit unvermeidbaren Verunreinigung einzeln maximal 0,05 %, bevorzugt 0,03 % in Summe maximal 0,15 %, bevorzugt maximal 0,10 %.

6. Batteriezellgehäuse nach einem der Ansprüche 1 bis 4,
   **dadurch gekennzeichnet, dass**
   die Aluminiumlegierung des Gehäusemantels aushärtbar ist und die folgende Zusammensetzung in Gew.-% aufweist:

0,3 % ≤ Si ≤ 0,7 %,
Fe ≤ 0,5 %,
Cu ≤ 0,45 %,
Mn ≤ 0,05 %,
0,22 % ≤ Mg ≤ 0,8 %
Cr ≤ 0,03 %,
Zn ≤ 0,1 %,
0,01 % ≤ Ti ≤ 0,20 %,
V ≤ 0,03 %, bevorzugt ≤ 0,015 %,
Zr ≤ 0,05 %, bevorzugt ≤ 0,015%,
Ni ≤ 0,03 %, bevorzugt ≤ 0,015 %,
Rest Al mit unvermeidbaren Verunreinigung einzeln maximal 0,03 %, in Summe maximal 0,10 %.

7. Batteriezellgehäuse nach einem der Ansprüche 1 bis 4,
**dadurch gekennzeichnet, dass**
die Aluminiumlegierung des Gehäusemantels nicht aushärtbar ist und die folgende Zusammensetzung in Gew.-% aufweist:

0,2 % ≤ Si ≤ 0,6 %,
Fe ≤ 0,5 %,
Cu ≤ 0,45 %,
1,0 % ≤ Mn ≤ 1,4 %,
Mg ≤ 1,10 %, bevorzugt ≤ 0,8 %
Cr ≤ 0,25 %,
Zn ≤ 0,4 %,
Ti ≤ 0,2 %, bevorzugt 0,01 % ≤ Ti ≤ 0,20 %,
V ≤ 0,05 %,
Zr ≤ 0,25 %,
Ni ≤ 0,2 %,
Rest Al mit unvermeidbaren Verunreinigung einzeln maximal 0,05 %, in Summe maximal 0,15 %.

8. Batteriezellgehäuse nach einem der Ansprüche 1 bis 7,
**dadurch gekennzeichnet, dass**
der Gehäusemantel aus einer aushärtbaren Legierung besteht und den Temperzustand T6, T6x, T7 oder T7x aufweist.

9. Batteriezellgehäuse nach einem der Ansprüche 1 bis 3,
**dadurch gekennzeichnet, dass**
der Gehäusemantel mindestens einen Deckel aufweist, welcher mit diesem stoff- oder kraftschlüssig verbunden ist.

10. Verwendung einer Aluminiumlegierung zur Herstellung eines Batteriezellgehäuses nach einem der Ansprüche 1 bis 9,
**dadurch gekennzeichnet, dass**
ein Aluminiumlegierungsband oder -blech aus der Aluminiumlegierung zu einem Rohr oder Becher tief- und/oder streckgezogen wird.

11. Verwendung nach Anspruch 10,
**dadurch gekennzeichnet, dass**
das Aluminiumlegierungsband oder -blech vor dem Tief- und/oder Streckziehen im Zustand H18, H19 ist.

12. Verwendung nach Anspruch 10 oder 11,
**dadurch gekennzeichnet, dass**
das Aluminiumlegierungsband oder -blech aus einer aushärtbaren Aluminiumlegierung besteht und vor dem Tief- und/oder Streckziehen den Zustand T4 aufweist.

13. Verwendung nach einem der Ansprüche 10 bis 12,
**dadurch gekennzeichnet, dass**
alternativ der Gehäusemantel des Batteriezellgehäuses durch Längsnahtschweißen eines optional rollgeformtes Rohr aus einem Aluminiumlegierungsband oder -blech hergestellt wird.

14. Verwendung nach Anspruch 10,
**dadurch gekennzeichnet, dass**
alternativ der Gehäusemantel optional mit einem Deckelbereich aus einer Aluminiumlegierungsbutze fließgepresst oder der Gehäusemantel aus einem stranggepressten Rohr streckgezogen wird.

Fig.1

Fig.2

Europäisches
Patentamt

European
Patent Office

Office européen
des brevets

# EUROPÄISCHER RECHERCHENBERICHT

Nummer der Anmeldung

**EP 21 21 5667**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | KR 2016 0070707 A (KOBE STEEL LTD [JP]) 20. Juni 2016 (2016-06-20) | 1-4,7,9, 10,13,14 | INV. H01M50/116 |
| A | * Absatz [0008] – Absatz [0046]; Tabellen 1,2 * | 6,8,11, 12 | C22C21/00 C22C21/08 C22F1/05 |
| | ----- | | |
| X | US 2020/040432 A1 (KANEKO HIROSHI [JP]) 6. Februar 2020 (2020-02-06) | 1-3,5,9, 10,13,14 | |
| A | * Absatz [0008]; Tabellen 1,2 * | 6,8,11, 12 | |
| | ----- | | |
| A | JP 6 033141 B2 (KOBE STEEL LTD) 30. November 2016 (2016-11-30) * das ganze Dokument * | 1-14 | |
| | ----- | | |

**RECHERCHIERTE SACHGEBIETE (IPC)**

H01M
C22C
C22F

Der vorliegende Recherchenbericht wurde für alle Patentansprüche erstellt

| Recherchenort | Abschlußdatum der Recherche | Prüfer |
|---|---|---|
| München | 25. Mai 2022 | Radeck, Stephanie |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 21 5667

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-05-2022

| Im Recherchenbericht angeführtes Patentdokument | Datum der Veröffentlichung | Mitglied(er) der Patentfamilie | | Datum der Veröffentlichung |
|---|---|---|---|---|
| KR 20160070707 A | 20-06-2016 | CN | 105695803 A | 22-06-2016 |
| | | JP | 6189823 B2 | 30-08-2017 |
| | | JP | 2016113627 A | 23-06-2016 |
| | | KR | 20160070707 A | 20-06-2016 |
| US 2020040432 A1 | 06-02-2020 | CN | 110475885 A | 19-11-2019 |
| | | EP | 3604580 A1 | 05-02-2020 |
| | | JP | 6430085 B1 | 28-11-2018 |
| | | JP | 2019039075 A | 14-03-2019 |
| | | JP | WO2018181505 A1 | 04-04-2019 |
| | | KR | 20190133151 A | 02-12-2019 |
| | | US | 2020040432 A1 | 06-02-2020 |
| | | WO | 2018181505 A1 | 04-10-2018 |
| JP 6033141 B2 | 30-11-2016 | CN | 104073700 A | 01-10-2014 |
| | | JP | 6033141 B2 | 30-11-2016 |
| | | JP | 2014185377 A | 02-10-2014 |
| | | KR | 20140116820 A | 06-10-2014 |
| | | KR | 20160053858 A | 13-05-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6258480 B1